# EUROPÄISCHE PATENTSCHRIFT

(11) **EP 3 404 240 B1**
(45) Veröffentlichungstag und Bekanntmachung des Hinweises auf die Patenterteilung: **19.08.2020**
(21) Anmeldenummer: 18170965.0
(22) Anmeldetag: 07.05.2018
(51) Int. Cl.: F02D 41/02, B60W 30/19, F02D 13/02, F02D 13/04

(54) **VERFAHREN ZUR HOCHSCHALTUNTERSTÜTZUNG UND VORRICHTUNG HIERZU**
METHOD FOR UPSHIFTING SUPPORT AND DEVICE FOR SAME
PROCÉDÉ D'AIDE À LA MONTÉE DES VITESSES ET DISPOSITIF CORRESPONDANT

(30) Priorität: 18.05.2017 DE 102017004818
(43) Veröffentlichungstag der Anmeldung: 21.11.2018
(73) Patentinhaber: MAN Truck & Bus SE, 80995 München (DE)
(72) Erfinder: Hirschmann, Steffen, 91413 Neustadt an der Aisch (DE); Malischewski, Thomas, 91560 Heilsbronn (DE); Hyna, Dominic, 90763 Fürth (DE)
(74) Vertreter: v. Bezold & Partner Patentanwälte - PartG mbB

(56) Entgegenhaltungen:
- EP-A1- 0 638 455
- WO-A1-2018/013037
- DE-A1- 10 242 758
- DE-A1-102011 002 142
- US-A- 5 947 863
- US-A1- 2004 260 443
- US-A1- 2006 199 699
- US-A1- 2010 288 217
- US-A1- 2015 066 318
- US-B1- 6 293 248

## Beschreibung

Die Erfindung betrifft ein Verfahren zur Hochschaltunterstützung und einen variablen Ventiltrieb.

Im Nutzfahrzeugbereich wird die Motordrehzahlabsenkung für die Angleichung der Drehzahlen von Motor und Getriebe beim Hochschalten eines Ganges typischerweise mittels vorhandener Motorbremsklappen ermöglicht. Je nach Lage der Klappe (vor oder nach einem Abgasturbolader) kann das Absenken der Motordrehzahl relativ lange dauern, da das Abgas stromaufwärts der Klappe bis zum Brennraum aufgestaut werden muss. Der Kolben muss das Abgas im Zylinder gegen das aufgestaute Abgas im Abgastrakt ausschieben. Es kommt zu einer Mehrarbeit. Dadurch kommt es zu einer Verringerung der Motordrehzahl.

Neben der zeitlichen Länge der Motordrehzahlabsenkung mittels Motorbremsklappe weist das bekannte Verfahren ferner den Nachteil auf, dass es zu einem Turboloch am Ende des Hochschaltvorgangs kommen kann. Dies liegt daran, dass die Abgasturbine des Abgasturboladers aufgrund des aufgestauten Abgases nicht voll durchströmt wird und somit der Ladedruck im Motorbremsbetrieb erheblich abnimmt.

Die US 5 947 863 A ist auf ein Verfahren zum Steuern des Eingangsdrehmoments eines Getriebes während eines Übersetzungsschaltvorgangs gerichtet. Das Eingangsdrehmoment wird durch vorgegebene Maßnahmen, z. B. mittels eines variablen Ventiltriebs, über den zu Beginn des Schaltvorgangs vorhandenen Wert hinaus in Abhängigkeit von der vorliegenden Schaltart erhöht oder verringert.

Die US 2015/066318 A1 offenbart ein Steuerverfahren für ein Fahrzeuggetriebe. Eine Motorbremswirkung wird aktiviert. Wenn die Drehzahl nach der Motorbremsung auf einen vorbestimmten Wert oder weniger reduziert wird, wird ein Schaltvorgang durchgeführt.

Die EP 0 638 455 A1 offenbart ein Steuerverfahren zum Steuern des Hochschaltens in einem automatisierten mechanischen Getriebesystem, das mit einer Motor-Kompressionsbremse versehen ist. Die Motor-Kompressionsbremse wird während eines Hochschaltens des Getriebes betrieben.

Die US 2006/199699 A1 offenbart ein Verfahren, bei dem während der Fahrt des Fahrzeugs mit Hilfe eingegebener Informationen über mindestens die Steigung der Fahrbahn und die Drosselklappenstellung ein zukünftiger Widerstand gegen Vorwärtsbewegung und den Zeitraum bis zu einer zukünftigen Transiente im Betriebszustand des Motors berechnet wird, zum Beispiel in Verbindung mit einem zukünftigen Gangwechsel in einem mit dem Motor verbundenen Getriebe.

Die US 2004/260443 A1 bezieht sich auf ein Verfahren zum Hochschalten eines automatischen oder halbautomatischen Getriebes, das mit einem Motor verbunden ist, der mit einer zusätzlichen Motorbremse ausgestattet ist, wobei das Verfahren das Bestimmen eines erwarteten Wertes der Geschwindigkeitsableitung des Motors während des Schaltens umfasst.

Der Erfindung liegt die Aufgabe zu Grunde, ein verbessertes Verfahren zur Hochschaltunterstützung und eine Vorrichtung hierzu vorzusehen, die insbesondere eine Verkürzung des Hochschaltvorgangs und einen höheren Ladedruck am Ende des Hochschaltvorgangs ermöglichen.

Die Aufgabe wird gelöst durch ein Verfahren zur Hochschaltunterstützung und einen variablen Ventiltrieb gemäß den unabhängigen Ansprüchen. Vorteilhafte Weiterbildungen sind in den abhängigen Ansprüchen und der Beschreibung angegeben.

Das Verfahren zur Hochschaltunterstützung bei einem Gangwechsel eines mit einem Verbrennungsmotor verbundenen Getriebes weist das Initiieren eines Hochschaltvorgangs und das Verringern einer Motordrehzahl des Verbrennungsmotors durch Schalten in einen Motorbremsbetrieb auf. Im Motorbremsbetrieb wird ein erstes Auslassventil des Verbrennungsmotors im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet. Alternativ oder zusätzlich wird mittels eines variablen Ventiltriebs, insbesondere eines Schiebenockensystems, des Verbrennungsmotors in den Motorbremsbetrieb geschaltet.

Durch die Dekompression am Ende des Verdichtungstaktes und/oder am Ende des Ausschubtaktes kann sehr schnell eine Motorbremswirkung erzielt werden, da nicht erst Abgas stromaufwärts eines Abgasdrosselventils aufgestaut werden muss. Dadurch kann die Drehzahl in kurzer Zeit abgesenkt werden und somit ein schneller Hochschaltvorgang realisiert werden. Zusätzlich oder alternativ wird der Motorbremsbetrieb durch Veränderung der Ventilsteuerkurven durch den variablen Ventiltrieb dargestellt. Dies ermöglicht einen Motorbremsbetrieb bei dem keine Abgasdrosselklappe verstellt werden muss, sodass eine Turbinendrehzahl einer Abgasturbine weniger stark abgesenkt wird. Damit kann ein Turboloch nach dem Hochschaltvorgang verkleinert oder verhindert werden.

Insbesondere kann im Motorbremsbetrieb vom jeweiligen Zylinder des Verbrennungsmotors negative Arbeit verrichtet werden.

Während des Motorbremsbetriebes kann insbesondere kein Kraftstoff zu den im Motorbremsbetrieb betriebenen Zylindern geleitet werden und keine Zündung stattfinden.

Das Verfahren kann insbesondere zur Hochschaltunterstützung bei einem Gangwechsel eines, insbesondere vollautomatischen, Getriebes, das mit einem Verbrennungsmotor verbunden ist, verwendet werden.

Es versteht sich, dass auch mehrere (erste) Auslassventile verschiedener Zylinder des Verbrennungsmotors in den Motorbremsbetrieb geschaltet werden können.

In einer weiteren Variante weist das Schiebenockensystem einen auf einer Nockenwelle des Verbrennungsmotors drehfest und axial verschiebbar angeordneten Nockenträger mit dem ersten Nocken und dem in einer Längsrichtung der Nockenwelle versetzt angeordneten zweiten Nocken auf.

In einer besonders bevorzugten Ausführungsvariante weist das Verfahren zusätzlich das Halten und/oder Erhöhen eines Ladedrucks und/oder einer Turboladerdrehzahl eines Turboladers des Verbrennungsmotors auf. Dies wird ermöglicht durch Ausschieben der verdichteten Luft zu einer Abgasturbine des Turboladers im Verdichtungstakt und/oder im Ausschubtakt durch Öffnen des ersten Auslassventils vor Erreichen des oberen Totpunkts der Kolbenbewegung. Dies hat den Vorteil, dass ein Turboloch nach dem Hochschalten verhindert oder zumindest verkleinert werden kann.

In einem Ausführungsbeispiel weist das Verfahren das Erfassen einer erforderlichen Drehzahlabsenkung für den Hochschaltvorgang, einer erforderlichen Drehmomenterhöhung für den Hochschaltvorgang, einer gewünschten Dauer des Hochschaltvorgangs, einer gewünschten Turboladerdrehzahl insbesondere am Ende des Hochschaltvorgangs und/oder einem gewünschten Ladedruck insbesondere am Ende des Hochschaltvorgangs auf. Der Schritt des Verringerns der Motordrehzahl des Verbrennungsmotors durch Schalten in den Motorbremsbetrieb wird insbesondere in Abhängigkeit der erforderlichen Drehzahlabsenkung, der erforderlichen Drehmomenterhöhung, der gewünschten Dauer des Hochschaltvorgangs, der gewünschten Turboladerdrehzahl und/oder des gewünschten Ladedrucks durchgeführt. Folglich kann eine Benutzung und somit bspw. ein Verschleiß des Umschaltsystems verhindert werden, wenn beispielsweise nur geringe Drehzahlabsenkungen erforderlich sind.

Vorzugsweise kann eine erste Gruppe von Zylindern während des Hochschaltvorgangs in den Motorbremsbetrieb geschaltet werden. Eine zweite Gruppe von Zylindern des Verbrennungsmotors kann während des Hochschaltvorgangs im Normalbetrieb weiterbetrieben werden.

Insbesondere kann eine Anzahl von Zylindern in der ersten Gruppe und/oder der zweiten Gruppe in Abhängigkeit von der erforderlichen Drehzahlabsenkung, der erforderlichen Drehmomenterhöhung, der gewünschten Dauer des Hochschaltvorgangs, der gewünschten Turboladerdrehzahl und/oder dem gewünschten Ladedruck bestimmt werden. Damit können je nach Anforderung (z.B. erforderlicher Lastsprung) mehr oder weniger Zylinder während des Hochschaltvorgangs im Motorbremsbetrieb betrieben werden.

In einer bevorzugten Variante erfolgt eine Zuordnung zur ersten Gruppe und/oder zur zweiten Gruppe rollierend, insbesondere rollierend zwischen aufeinanderfolgenden Hochschaltvorgängen. Somit kann ein Verschleiß des Umschaltsystems vergleichmäßigt werden.

In einer weiteren Ausführungsvariante ist der zweite Nocken so ausgebildet ist, dass das erste Auslassventil zwischen 100° KW und 60° KW (Kurbelwinkel) vor dem Erreichen des oberen Totpunkts öffnet, nach dem Öffnen im Ausschubtakt im Bereich zwischen dem oberen Totpunkt und 30° KW nach dem oberen Totpunkt schließt und/oder nach dem Öffnen im Verdichtungstakt im Bereich zwischen dem unteren Totpunkt und 30° KW nach dem unteren Totpunkt schließt. Damit kann eine erhebliche Motorbremswirkung aufgrund der zweifachen Dekompression erzielt werden.

In einer weiteren Ausführungsform weist das Verfahren das Geschlossen-Halten eines zweiten Auslassventils des Verbrennungsmotors während des Hochschaltvorgangs auf. Das zweite Auslassventil ist insbesondere demselben Zylinder des Verbrennungsmotors zugeordnet wie das erste Auslassventil. Durch das Geschlossen-Halten des zweiten Auslassventils kann eine Belastung des Umschaltsystems während des Motorbremsbetriebs verringert werden, da nicht auch das zweite Auslassventil gegen den Druck im Zylinder geöffnet werden muss.

Das zweite Auslassventil kann insbesondere mittels eines nockenfreien Abschnitts des Schiebenockensystems während des Hochschaltvorgangs geschlossen gehalten werden.

In einer Weiterbildung weist das Schiebenockensystem einen ersten Nocken für einen Normalbetrieb des Verbrennungsmotors und einen zweiten Nocken für den Motorbremsbetrieb des Verbrennungsmotors auf. Das Schiebenockensystem setzt wahlweise den ersten Nocken und das erste Auslassventil in Wirkverbindung oder den zweiten Nocken und das erste Auslassventil in Wirkverbindung. Das Schiebenockensystem stellt ein zuverlässiges und besonders schnelles System zum Umschalten in den Motorbremsbetrieb bereit.

In einer vorteilhaften Weiterbildung weist das Schalten in den Motorbremsbetrieb das Umschalten von dem ersten Nocken auf den zweiten Nocken durch das Schiebenockensystem und das Betätigen des ersten Auslassventils mittels des zweiten Nockens auf. Der zweite Nocken hält das erste Auslassventil im Verdichtungstakt und/oder im Ausschubtakt zunächst geschlossen und öffnet es vor Erreichen des oberen Totpunkts der Kolbenbewegung.

In einer Variante wird das zweite Auslassventil mittels eines nockenfreien Abschnitts des Schiebenockensystems während des Hochschaltvorgangs geschlossen gehalten.

In einer Ausführungsvariante weist das Verfahren das Umschalten von dem zweiten Nocken auf den ersten Nocken durch das Schiebenockensystem auf, wenn die Motordrehzahl auf eine gewünschte Drehzahl, insbesondere eine Getriebedrehzahl des mit dem Verbrennungsmotor verbundenen Getriebes, verringert wurde. Damit kann der Hochschaltvorgang beendet und der Verbrennungsmotor wieder vollständig im Normalbetrieb betrieben werden.

In einer Ausführungsform weist der variable Ventiltrieb eine erste Gruppe von Schiebenockensystemen und eine zweite Gruppe von Schiebenockensystemen auf. Die erste Gruppe betätigt während des Hochschaltvorgangs das entsprechende erste Auslassventil mittels des entsprechenden zweiten Nockens. Die zweite Gruppe betätigt während des Hochschaltvorgangs das entsprechende erste Auslassventil mittels des entsprechenden ersten Nockens, der das erste Auslassventil im Ausschubtakt öffnet.

Insbesondere kann eine Anzahl von Schiebenockensystemen in der ersten Gruppe und/oder der zweiten Gruppe in Anhängigkeit von einer erforderlichen Drehzahlabsenkung zum Hochschalten, einer erforderlichen Drehmomenterhöhung zum Hochschalten, einer gewünschten Zeitdauer des Hochschaltvorgangs, einer gewünschten Turboladerdrehzahl insbesondere am Ende des Hochschaltvorgangs und/oder einem gewünschten Ladedruck insbesondere am Ende des Hochschaltvorgangs bestimmt werden. Ist bspw. eine besonders kurze Hochschaltdauer gewünscht, so können mehrere oder alle Schiebenockensystem auf den jeweiligen zweiten Nocken zum Betätigen des jeweiligen ersten Auslassventils umgeschaltet werden.

In einer vorteilhaften Weiterbildung erhöht sich die Anzahl von Schiebenockensystemen in der ersten Gruppe mit einer Vergrößerung der erforderlichen Drehzahlabsenkung, einer Vergrößerung der erforderlichen Drehmomenterhöhung, einer Verkürzung der gewünschten Zeitdauer des Hochschaltvorgangs, einer Vergrößerung der gewünschten Turboladerdrehzahl und/oder einer Vergrößerung des gewünschten Ladedrucks.

In einer bevorzugten Variante erfolgt eine Zuordnung der Schiebenockensysteme zur ersten Gruppe und zweiten Gruppe rollierend, insbesondere rollierend zwischen aufeinanderfolgenden Hochschaltvorgängen. Somit kann ein Verschleiß der Schiebenockensysteme vergleichmäßigt werden.

In einem weiteren Ausführungsbeispiel wird der Hochschaltvorgang automatisch in Anhängigkeit von einer Motordrehzahl und/oder einer Drosselklappenstellung initiiert. Hierbei kann insbesondere ein automatisches Getriebe verwendet werden.

In einer Ausführungsform wird im Getriebe während des Hochschaltvorgangs von einem Getriebegang zu einem anderen Getriebegang mit höherer Übersetzung geschaltet.

Die Erfindung betrifft auch einen variabler Ventiltrieb für einen Verbrennungsmotor eines Kraftfahrzeugs, insbesondere Nutzfahrzeugs. Der variable Ventiltrieb weist ein erstes Auslassventil, eine Nockenwelle und ein Schiebenockensystem auf. Das Schiebenockensystem weist einen Nockenträger, der auf der Nockenwelle drehfest und axial verschiebbar angeordnet ist und einen ersten Nocken und einen zweiten Nocken aufweist, auf. Der erste Nocken und der zweite Nocken sind in einer Längsrichtung der Nockenwelle versetzt angeordnet. Der variable Ventiltrieb weist eine Steuereinheit auf, die dazu ausgebildet ist, das Verfahren zur Hochschaltunterstützung wie hierin offenbart durchzuführen.

Der Begriff "Steuereinheit" bezieht sich auf eine Steuerelektronik, die je nach Ausbildung Steuerungsaufgaben und/oder Regelungsaufgaben übernehmen kann.

Vorzugsweise ist der Nockenträger axial verschiebbar zwischen einer ersten Axialposition und einer zweiten Axialposition auf der Nockenwelle angeordnet. Der Ventiltrieb weist ferner eine Übertragungsvorrichtung auf. In der ersten Axialposition des Nockenträgers ist die Übertragungsvorrichtung in Wirkverbindung zwischen dem ersten Nocken und dem ersten Auslassventil. In der zweiten Axialposition des Nockenträgers ist die Übertragungsvorrichtung in Wirkverbindung zwischen dem zweiten Nocken und dem ersten Auslassventil. Der erste Nocken ist für einen Normalbetrieb des Verbrennungsmotors ausgebildet, bei dem der erste Nocken das erste Auslassventil im Ausschubtakt offen hält. Der zweite Nocken ist für einen Motorbremsbetrieb des Verbrennungsmotors ausgebildet, bei dem der zweite Nocken das erste Auslassventil im Verdichtungstakt und/oder im Ausschubtakt zunächst geschlossen hält und vor Erreichen eines oberen Totpunkts einer Kolbenbewegung eines Kolbens des Verbrennungsmotors das erste Auslassventil öffnet.

Es versteht sich, dass während der zweite Nocken im Eingriff mit der ersten Übertragungsvorrichtung ist, das oder die Einlassventile weiterhin nur während des Einlasstaktes öffnen. Es kommt jedoch zu keiner Kraftstoffeinleitung und Gemischzündung.

Der erste Nocken und der zweite Nocken können eine unterschiedliche Nockenkontur aufweisen und/oder in einer Umfangsrichtung des Nockenträgers versetzt zueinander angeordnet sein.

In einem Ausführungsbeispiel weist der Nockenträger einen dritten Nocken, der wie der erste Nocken ausgebildet ist, und einen nockenfreien Abschnitt auf. Der erste Nocken, der zweite Nocken, der dritte Nocken und der nockenfreie Abschnitt sind in einer Längsrichtung der Nockenwelle versetzt angeordnet. Insbesondere grenzen der erste Nocken an den zweiten Nocken und der dritte Nocken an den nockenfreien Abschnitt. Die Integration eines dritten Nockens und des nockenfreien Abschnitts ermöglicht, dass ein zweites Auslassventil im Bremsbetrieb anders betätigt werden kann als das erste Auslassventil. Im Normalbetrieb kann das zweite Auslassventil hingegen wie das erste Auslassventil betätigt werden, da der dritte Nocken und der erste Nocken gleich geformt sind.

Der nockenfreie Abschnitt wird auch als Nullnocken bezeichnet. Der nockenfreie Abschnitt weist eine Zylindermantelfläche ohne Erhebung zum Betätigen der Übertragungsvorrichtung auf.

Vorzugsweise weist der Ventiltrieb ein zweites Auslassventil, das insbesondere demselben Zylinder zugeordnet ist wie das erste Auslassventil, und eine zweite Übertragungsvorrichtung auf. Die zweite Übertragungsvorrichtung ist in der ersten Axialposition des Nockenträgers in Wirkverbindung zwischen dem dritten Nocken und dem zweiten Auslassventil. In der zweiten Axialposition des Nockenträgers hält die zweite Übertragungsvorrichtung das zweite Auslassventil aufgrund der Ausbildung des nockenfreien Abschnitts geschlossen. Hierbei kann der nockenfreie Abschnitt in Eingriff oder außer Eingriff mit der zweiten Übertragungsvorrichtung sein.

Es versteht sich, dass die zweite Übertragungsvorrichtung in der zweiten Axialposition des Nockenträgers mit keinem anderen Nocken des Nockenträgers in Wirkverbindung ist.

Diese Ausgestaltung hat den Vorteil, dass nur das erste Auslassventil für den Bremsbetrieb verwendet wird. Das zweite Auslassventil verbleibt dann, wenn das erste Auslassventil für den Bremsbetrieb verwendet wird, während des gesamten Zyklus geschlossen. Damit können die Belastungen auf den variablen Ventiltrieb verringert werden. Insbesondere ergeben sich beim Öffnen eines Auslassventils gegen den Druck im Zylinder große Flächenpressungen zwischen dem Nocken und der Kontaktfläche der Übertragungsvorrichtung. In Ausgestaltungen, bei denen beide Auslassventile während des Bremsbetriebs betätigt werden, muss der variable Ventiltrieb entsprechend robuster gestaltet werden.

In einem alternativen Ausführungsbeispiel weist der Ventiltrieb ferner ein zweites Auslassventil auf, das insbesondere demselben Zylinder zugeordnet ist wie das erste Auslassventil. Die erste Übertragungsvorrichtung ist in der ersten Axialposition des Nockenträgers zusätzlich in Wirkverbindung zwischen dem ersten Nocken und dem zweiten Auslassventil und in der zweiten Axialposition zusätzlich in Wirkverbindung zwischen dem zweiten Nocken und dem zweiten Auslassventil.

Der erste Nocken und der dritte Nocken können eine gleiche Nockenkontur aufweisen und/oder in einer Umfangsrichtung des Nockenträgers zueinander (fluchtend) ausgerichtet angeordnet sein.

Diese Ausgestaltung hat den Vorteil, dass beide Auslassventile für den Bremsbetrieb verwendet werden. Beide Auslassventile werden über die gleiche Übertragungsvorrichtung und den gleichen Nocken betätigt.

In einer Ausführungsvariante weist der Nockenträger eine erste Eingriffsspur zum axialen Verschieben des Nockenträgers in eine erste Richtung auf. Die erste Eingriffsspur erstreckt sich insbesondere spiralförmig.

Die erste Eingriffsspur ist dazu ausgebildet, im Eingriff mit einem Aktor den Nockenträger axial zu verschieben, zum Beispiel von der ersten Axialposition zu der zweiten Axialposition oder von der zweiten Axialposition zu der ersten Axialposition.

In einem besonders bevorzugten Ausführungsbeispiel ist die erste Eingriffsspur in dem nockenfreien Abschnitt angeordnet. Mit anderen Worten gesagt, erstreckt sich die erste Eingriffsspur in dem Nullnocken.

Eine solche Ausgestaltung bietet den Vorteil, dass der nockenfreie Abschnitt zum einen für die Axialverschiebung verwendet wird. Zum anderen sorgt der nockenfreie Abschnitt dafür, dass das zweite Auslassventil im Motorbremsbetrieb nicht geöffnet wird. Durch die Funktionsintegration kann ein Bauraum für den Nockenträger verkleinert werden.

In einer weiteren Ausführungsvariante ist die erste Eingriffsspur und/oder der nockenfreie Abschnitt zwischen dem ersten Nocken und dem dritten Nocken oder an einem Ende des Nockenträgers angeordnet. Die Anordnung der Nocken, des nockenfreien Abschnitts und der ersten Eingriffsspur kann flexibel den jeweiligen Anforderungen angepasst werden.

In einer Ausführungsform weist der Nockenträger eine zweite Eingriffsspur zum axialen Verschieben des Nockenträgers in eine zweite Richtung, die der ersten Richtung entgegengesetzt ist, auf. Die zweite Eingriffsspur ist zwischen dem ersten Nocken und dem dritten Nocken oder an einem Ende des Nockenträgers angeordnet. Die zweite Eingriffsspur kann sich insbesondere spiralförmig erstrecken.

Die zweite Eingriffsspur ist dazu ausgebildet, im Eingriff mit einem Aktor den Nockenträger axial zu verschieben, zum Beispiel von der ersten Axialposition zu der zweiten Axialposition oder von der zweiten Axialposition zu der ersten Axialposition. Die erste und zweite Eingriffsspur bieten eine zuverlässige Möglichkeit zum Verschieben des Nockenträgers.

In einer weiteren Ausführungsform weist der variable Ventiltrieb einen ersten Aktor auf, der dazu ausgebildet ist, selektiv in Eingriff mit der ersten Eingriffsspur zum Verschieben des Nockenträgers in die erste Richtung zu gelangen. Alternativ oder zusätzlich weist der variable Ventiltrieb einen zweiten Aktor auf, der dazu ausgebildet ist, selektiv in Eingriff mit der zweiten Eingriffsspur zum Verschieben des Nockenträgers in die zweite Richtung zu gelangen.

Vorteilhafterweise weist die Nockenwelle eine Arretierungsvorrichtung mit einem elastisch vorgespannten Element auf, das in der ersten Axialposition des Nockenträgers in eine erste Ausnehmung im Nockenträger eingreift und in der zweiten Axialposition des Nockenträgers in eine zweite Ausnehmung im Nockenträger eingreift.

Die Arretierungsvorrichtung hat den Vorteil, dass der Nockenträger in der ersten und zweiten Axialposition festgesetzt werden kann. Der Nockenträger kann sich somit nicht unbeabsichtigt entlang einer Längsrichtung der Nockenwelle verschieben.

In einem weiteren Ausführungsbeispiel ist die erste Übertragungseinrichtung und/oder die zweite Übertragungseinrichtung als ein Hebel, insbesondere ein Kipphebel oder ein Schlepphebel, oder ein Stößel ausgebildet. Ein Schlepphebel kann beispielsweise bei einer obenliegenden Nockenwelle verwendet werden. Ein Kipphebel kann beispielsweise bei einer untenliegenden Nockenwelle verwendet werden.

In einer weiteren Ausführungsvariante ist die Nockenwelle als eine obenliegende Nockenwelle oder eine untenliegende Nockenwelle angeordnet. Alternativ oder zusätzlich ist die Nockenwelle Teil eines Doppelnockenwellensystems ist, das zusätzlich eine weitere Nockenwelle zur Betätigung mindestens eines Einlassventils aufweist.

In einer weiteren Ausführungsform kann die Nockenwelle für das oder die Auslassventile und/oder die weitere Nockenwelle für das oder die Einlassventile einen Phasensteller aufweisen. Der Phasensteller ist dazu ausgebildet, einen Drehwinkel einer Nockenwelle relativ zu einem Drehwinkel einer Kurbelwelle zu verstellen. Somit kann der Phasensteller eine Verstellung der Steuerzeiten für die jeweiligen Ventile ermöglichen. Der Phasenversteller kann beispielsweise als hydraulischer Phasenversteller, insbesondere als eine Schwenkmotorphasenversteller, ausgebildet sein. Eine solche Ausführungsform hat den Vorteil, dass die Flexibilität des Systems durch die Kombination mit dem verschiebbaren Nockenträger weiter gesteigert wird.

In einer weiteren Ausführungsvariante ist der zweite Nocken so ausgebildet, dass das erste Auslassventil nach dem Öffnen im Verdichtungstakt mit einem größeren Ventilhub geöffnet wird als nach dem Öffnen im Ausschiebetakt. Alternativ oder zusätzlich ist der zweite Nocken so ausgebildet, dass das erste Auslassventil mit einem kleineren Ventilhub als beim ersten Nocken geöffnet wird. Das Vorsehen von mehrstufigen Ventilhüben, die kleiner sind als die Ventilhübe während des normalen Betriebs, verringert die Belastung auf den Ventiltrieb. Insbesondere beim Öffnen eines Auslassventils gegen den Druck im Zylinder wird der Ventiltrieb stark belastet.

In Ausführungsformen, in denen der zweite Nocken auch zum Betätigen des zweiten Auslassventils verwendet wird, gelten die Ausführungen hierin, die sich auf die Wirkung des zweiten Nockens auf das erste Auslassventil beziehen, gleichermaßen für das zweite Auslassventil. In Ausführungsformen, in denen der dritte Nocken zum Betätigen des zweiten Auslassventils verwendet wird, gelten die Ausführungen hierin, die sich auf die Wirkung des ersten Nockens auf das erste Auslassventil beziehen, gleichermaßen für den dritten Nocken und das zweite Auslassventil.

Letztlich betrifft die Erfindung zudem ein Kraftfahrzeug, insbesondere Nutzfahrzeug, mit einem variablen Ventiltrieb wie hierin offenbart. Das Nutzfahrzeug kann zum Beispiel ein Lastkraftwagen oder ein Omnibus sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines beispielhaften variablen Ventiltriebs;
- Figur 2: eine weitere perspektivische Ansicht des beispielhaften variablen Ventiltriebs;
- Figur 3: eine Draufsicht auf eine Nockenwelle des beispielhaften variablen Ventiltriebs;
- Figur 4: eine Längsschnittansicht der Nockenwelle von Figur 3 entlang der Linie A-A;
- Figur 5: ein beispielhaftes Ventilsteuerungsdiagramm des variablen Ventiltriebs;
- Figur 6A: eine erste Querschnittansicht der Nockenwelle von Figur 4 entlang der Linie B-B;
- Figur 6B: eine zweite Querschnittansicht der Nockenwelle von Figur 4 entlang der Linie C-C;
- Figur 7: ein beispielhaftes Verfahren zur Hochschaltunterstützung bei Gangwechseln gemäß der vorliegenden Offenbarung; und
- Figur 8: ein Diagramm, das verschiedene Motordrehzahlverläufe, Turboladerdrehzahlverläufe und Ladedruckverläufe in Abhängigkeit von der Zeit zeigt.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

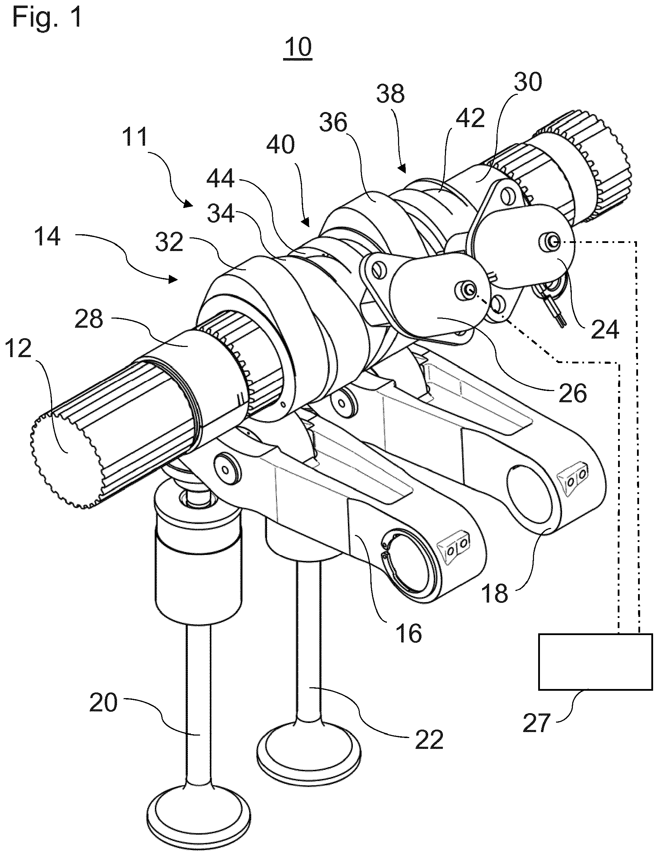

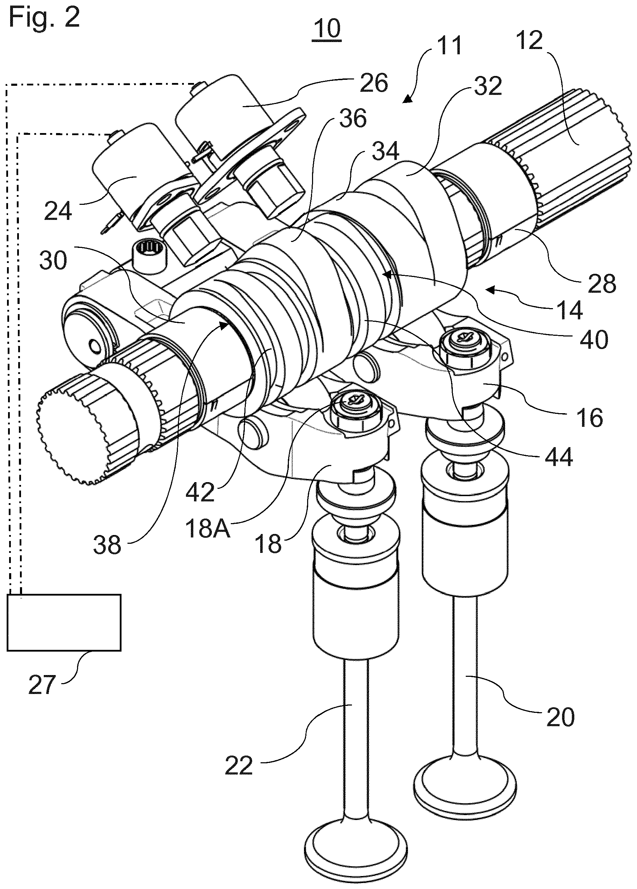

In den Figuren 1 und 2 ist ein variabler Ventiltrieb 10 gezeigt. Der variable Ventiltrieb 10 weist eine Nockenwelle 12 und einen Nockenträger 14 auf. Zusätzlich weist der variable Ventiltrieb 10 eine erste und zweite Übertragungsvorrichtung 16 und 18 sowie ein erstes und zweites Auslassventil 20 und 22 auf. Zudem weist der variable Ventiltrieb 10 einen ersten Aktor 24 und einen zweiten Aktor 26 auf. Der Nockenträger 14, die Übertragungsvorrichtungen 16 und 18 sowie die Aktoren 24 und 26 bilden ein Schiebenockensystem 11.

Die Nockenwelle 12 ist als eine Ausgangsnockenwelle ausgebildet, die Ausgangsventile 20 und 22 betätigt. Die Nockenwelle 12 ist Teil eines Doppelnockenwellensystems (nicht im Detail dargestellt), das zusätzlich eine Einlassnockenwelle (nicht dargestellt) zur Betätigung von einem oder mehreren Einlassventilen aufweist. Die Nockenwelle 12 ist gemeinsam mit der Einlassnockenwelle als obenliegende Nockenwelle angeordnet. Die Nockenwelle 12 und die Einlassnockenwelle bilden somit ein sogenanntes DOHC-System (engl. double overhead camshaft). Alternativ könnte die Nockenwelle 12 auch ein sogenanntes SOHC-System bilden (engl. single overhead camshaft). In anderen Ausführungsformen kann die Nockenwelle 12 auch als untenliegende Nockenwelle angeordnet sein.

Auf der Nockenwelle 12 ist der Nockenträger 14 drehfest angeordnet. Der Nockenträger 14 ist zusätzlich axial verschiebbar entlang einer Längsachse der Nockenwelle 12 angeordnet. Der Nockenträger 14 kann zwischen einem ersten Anschlag 28 und einem zweiten Anschlag 30 axial verschiebbar sein.

Unter Bezugnahme auf die Figuren 1 bis 4 ist nachfolgend der Nockenträger 14 beschrieben. Der Nockenträger 14 weist drei Nocken 32, 34 und 36 auf, die in einer Längsrichtung des Nockenträgers 14 und der Nockenwelle 12 voneinander versetzt sind. Der erste Nocken 32 ist an einem ersten Ende des Nockenträgers 14 angeordnet und für einen Normalbetrieb ausgebildet, wie später beispielhaft im Detail beschrieben. Der zweite Nocken 34 ist angrenzend an den ersten Nocken 32 angeordnet und für einen Motorbremsbetrieb ausgebildet, wie später ebenfalls beispielhaft im Detail beschrieben. Der Motorbremsbetrieb kann zum Verlangsamen und/oder Bremsen des Kraftfahrzeugs bei Bergabfahrten verwendet werden. Der Motorbremsbetrieb kann zusätzlich zur Reduzierung einer Motordrehzahl des Kraftfahrzeugs zur Hochschaltunterstützung bei einem Gangwechsel in einen höheren Gang verwendet werden. Der dritte Nocken 36 ist beabstandet zu dem zweiten Nocken 34 und dem zweiten Ende des Nockenträgers 14 angeordnet. Der dritte Nocken 36 ist für den Normalbetrieb ausgebildet. Der dritte Nocken 36 ist wie der ersten Nocken 32 geformt.

Der Nockenträger 14 weist zudem einen ersten nockenfreien Abschnitt 38 und einen zweiten nockenfreien Abschnitt 40 auf. Der erste nockenfreie Abschnitt 38 ist am zweiten Ende des Nockenträgers 14 angeordnet. Der zweite nockenfreie Abschnitt 40 ist zwischen dem zweiten Nocken 34 und dem dritten Nocken 36 angeordnet. Im ersten nockenfreien Abschnitt 38 erstreckt sich eine erste Eingriffsspur (Schaltkulisse) 42 spiralförmig um eine Längsachse des Nockenträgers 14. Im zweiten nockenfreien Abschnitt 40 erstreckt sich eine zweite Eingriffsspur (Schaltkulisse) 44 spiralförmig um die Längsachse des Nockenträgers 14.

Zum Verschieben des Nockenträgers 14 zwischen den Anschlägen 28 und 30 können die Aktoren 24 und 26 (Figuren 1 und 2) mit ausfahrbaren Elementen (nicht im Detail gezeigt) selektiv in die Eingriffsspuren 42, 44 eingreifen. Im Einzelnen kann der erste Aktor 24 selektiv in die erste Eingriffsspur 42 zum Verschieben des Nockenträgers 14 von einer Axialposition zu einer anderen Axialposition eingreifen. In einer ersten Axialposition liegt der Nockenträger 14 an dem zweiten Anschlag 30 an. In einer zweiten Axialposition liegt der Nockenträger 14 an dem ersten Anschlag 28 an. In den Figuren 1 bis 4 ist der Nockenträger in der ersten Axialposition dargestellt. Der zweite Aktor 26 wiederum kann selektiv in die zweite Eingriffsspur 44 eingreifen. Dann wird der Nockenträger 14 von der ersten Axialposition zu der zweiten Axialposition verschoben. Der erste Aktor 24 und der zweite Aktor 26 werden von einer schematisch dargestellten Steuereinheit 27 (Figuren 1 und 2) angesteuert.

Die Verschiebung wird dadurch ausgelöst, dass das ausgefahrene Element des jeweiligen Aktors 24, 26 bezüglich einer Axialrichtung der Nockenwelle 12 ortsfest ist. Folglich wird der verschiebbare Nockenträger 14 aufgrund der Spiralform der Eingriffsspuren 42, 44 in einer Längsrichtung der Nockenwelle 12 verschoben, wenn das ausgefahrene Element in die jeweilige Eingriffsspur 42, 44 eingreift. Am Ende des Verschiebevorgangs wird das verschiebbare Element des jeweiligen Aktors 24, 26 von der jeweiligen Eingriffsspur 42, 44 entgegengesetzt zu der Ausfahrrichtung geführt und somit eingefahren. Das verschiebbare Element des jeweiligen Aktors 24, 26 gelangt außer Eingriff mit der jeweiligen Eingriffsspur 42, 44.

Die erste Übertragungsvorrichtung 16 und die zweite Übertragungsvorrichtung 18 (Figuren 1 und 2) stellen eine Wirkverbindung zwischen dem Nockenträger 14 und den Auslassventilen 20, 22 her. Das erste Auslassventil 20 wird betätigt (geöffnet), wenn der erste Nocken 32 oder der zweite Nocken 34 die erste Übertragungsvorrichtung 16 nach unten drückt. Das zweite Auslassventil 22 wird betätigt (geöffnet) wenn der dritte Nocken 36 die zweite Übertragungsvorrichtung 18 nach unten drückt.

Befindet sich der Nockenträger 14 in der ersten Axialposition (wie in den Figuren 1 bis 4 gezeigt), ist die erste Übertragungsvorrichtung 16 in Wirkverbindung zwischen dem ersten Nocken 32 und dem ersten Auslassventil 20. Mit anderen Worten gesagt, ist die erste Übertragungsvorrichtung 16 in der ersten Axialposition des Nockenträgers 14 nicht in Wirkverbindung zwischen dem zweiten Nocken 34 und dem ersten Auslassventil 20. Das erste Auslassventil 20 wird gemäß einer Kontur des ersten Nockens 32 betätigt. In der zweiten Axialposition des Nockenträgers 14 ist die erste Übertragungsvorrichtung 16 in Wirkverbindung zwischen dem zweiten Nocken 34 und dem ersten Auslassventil 20. Das erste Auslassventil 20 wird gemäß einer Kontur des zweiten Nockens 34 betätigt.

In der ersten Axialposition des Nockenträgers 14 ist die zweite Übertragungsvorrichtung 18 in Wirkverbindung zwischen dem dritten Nocken 36 und dem zweiten Auslassventil 22. Das zweite Auslassventil 22 wird gemäß einer Kontur des dritten Nockens 36 betätigt. In der zweiten Axialposition des Nockenträgers 14 betätigt die zweite Übertragungsvorrichtung 18 das zweite Auslassventil 22 nicht. In der zweiten Axialposition des Nockenträgers 14 liegt ein Kontaktbereich 18A der zweiten Übertragungsvorrichtung 18 an der gleichen Axialposition bezüglich der Nockenwelle 12 wie der erste nockenfreie Abschnitt 38. Der erste nockenfreie Abschnitt 38 weist keine Erhebung zum Betätigen der zweiten Übertragungsvorrichtung 18 auf. Ist der Nockenträger 14 in der zweiten Axialposition, wird das zweite Auslassventil 22 nicht betätigt.

Der erste nockenfreie Abschnitt 38 hat somit zwei Funktionen. Einerseits nimmt der erste nockenfreie Abschnitt 38 die erste Führungsspur 42 auf. Andererseits dient der erste nockenfreie Abschnitt 38 dazu, dass keine Betätigung des zweiten Auslassventils 42 in der zweiten Axialposition des Nockenträgers 14 erfolgt. Diese Funktionsintegration ist aus Bauraumgründen günstig.

In der dargestellten Ausführungsform sind die erste Übertragungsvorrichtung 16 und die zweite Übertragungsvorrichtung 18 jeweils als ein Schlepphebel ausgebildet. In anderen Ausführungsformen können die Übertragungsvorrichtungen 16 und 18 als Kipphebel oder Stößel ausgebildet sein. In einigen Ausführungsformen können die Übertragungsvorrichtungen 16 und 18 Nockenfolger, zum Beispiel in Form von drehbaren Rollen, aufweisen.

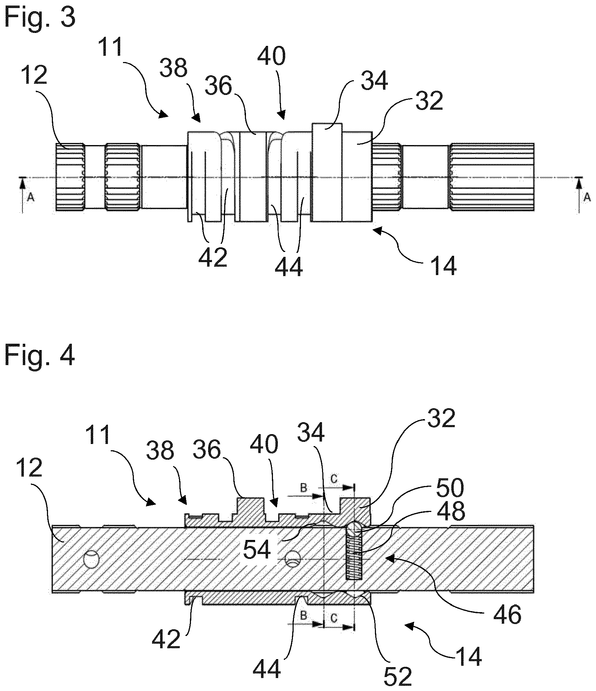

Unter Bezugnahme auf Figur 4 ist eine Arretierungsvorrichtung 46 gezeigt. Die Arretierungsvorrichtung 46 weist ein elastisches Element 48 und einen Sperrkörper 50 auf. Das elastische Element 48 ist in einem Sackloch der Nockenwelle 12 angeordnet. Das elastische Element 48 spannt den Sperrkörper 50 gegen den Nockenträger 14 vor. In einer Innenumfangsfläche des Nockenträgers 14 sind eine erste und zweite Ausnehmung 52 und 54 angeordnet. Zum Arretieren des Nockenträgers 14 wird der Sperrkörper 50 in die erste Ausnehmung 52 gedrückt, wenn der Nockenträger 14 in der ersten Axialposition ist. In der zweiten Axialposition des Nockenträgers 14 wird der Sperrkörper 50 in die zweite Ausnehmung 54 gedrückt.

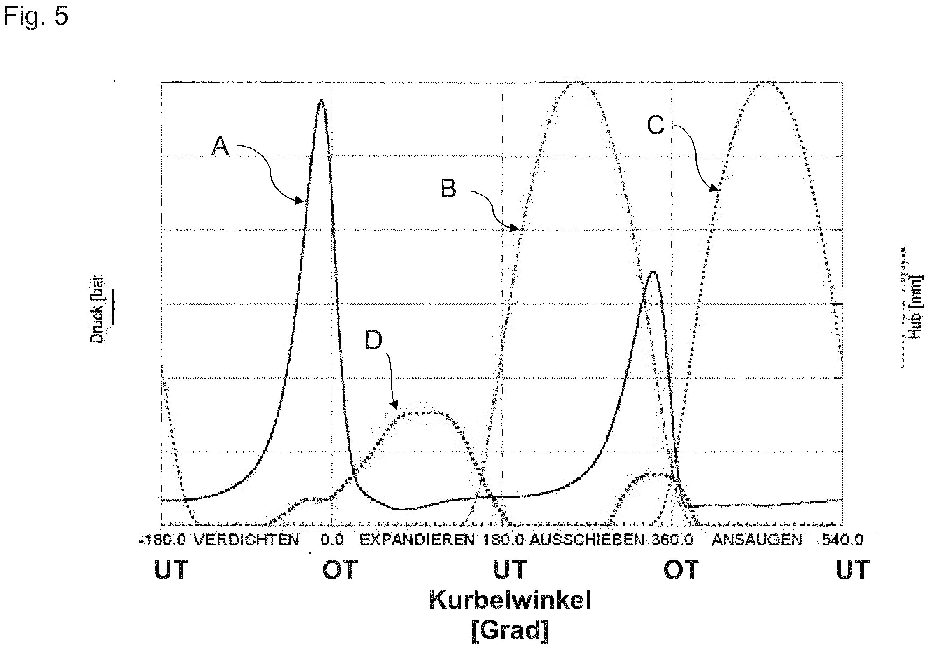

Unter Bezugnahme auf Figur 5 sind nachfolgend die Steuerung des ersten Auslassventils 20 sowie dessen Einfluss auf einen Zylinderdruck beschrieben. Figur 5 zeigt einen vollständigen Viertakt-Zyklus bestehend aus Verdichten, Expandieren, Ausschieben und Ansaugen.

Die Kurve A beschreibt den Verlauf des Zylinderdrucks im Motorbremsbetrieb, wenn der zweite Nocken 34 in Wirkverbindung mit dem ersten Auslassventil 20 ist. Die Kurve B zeigt den Verlauf des Ventilhubs des ersten Auslassventils 20, wenn der erste Nocken 32 in Verbindung mit dem ersten Auslassventil 20 ist (d.h. während des Normalbetriebs). Die dritte Kurve C zeigt den Verlauf des Ventilhubs eines Einlassventils sowohl während des Normalbetriebs und im Motorbremsbetrieb. Die Kurve D zeigt den Verlauf des Ventilhubs des ersten Auslassventils 20, wenn der zweite Nocken 34 in Wirkverbindung mit dem ersten Auslassventil 20 ist (d.h. während des Motorbremsbetriebs).

Die Kurve B zeigt, dass das Auslassventil im Normalbetrieb während des Ausschiebetaktes offen ist. Die Kurve C zeigt, dass das Einlassventil im Normalbetrieb und im Bremsbetrieb während des Ansaugtaktes (Einlasstaktes) offen ist.

Die Kurve D zeigt, dass das Auslassventil zum Ende des Verdichtungstaktes im Bereich des oberen Totpunkts bei rund 60° KW bis 100° KW vor dem oberen Totpunkt leicht geöffnet wird. Am oberen Totpunkt wird das Auslassventil weiter geöffnet und schließt am Ende des Expansionstaktes ungefähr am unteren Totpunkt. Das Öffnen des Auslassventils zum Ende des Verdichtungstaktes bewirkt, dass die verdichtete Luft im Zylinder durch das geöffnete Auslassventil in das Abgassystem durch den sich zum oberen Totpunkt bewegenden Kolben geschoben wird. Die zuvor verrichtete Verdichtungsarbeit bremst die Kurbelwelle und somit den Verbrennungsmotor. Der Zylinderdruck steigt im Verdichtungstakt zunächst an, sinkt dann jedoch infolge der Öffnung des Auslassventils schon vor dem oberen Totpunkt ab (vgl. Kurve A). Das offene Auslassventil während des Expansionstaktes bewirkt, dass Luft aus den Abgasleitungen zurück in den Zylinder gesaugt wird. Am Ende des Expansionstaktes ist der Zylinder im Wesentlichen mit Luft aus dem Abgassystem gefüllt.

Die Kurve D zeigt zudem, dass das Auslassventil nach Erreichen des unteren Totpunkts am Ende des Expansionstaktes zunächst geschlossen bleibt. Zum Ende des Ausschiebetaktes öffnet sich das Auslassventil im Bereich des oberen Totpunkts. Die Öffnung erfolgt wiederum bei rund 60° KW bis 100° KW vor dem oberen Totpunkt. Das geschlossene Auslassventil während des ersten Abschnitts des Ausschiebetakts bewirkt, dass die im Expansionstakt angesaugte Luft unter Verrichtung von Arbeit verdichtet wird. Der Zylinderdruck steigt an (Kurve A). Die Verdichtungsarbeit bremst die Kurbelwelle und somit den Verbrennungsmotor. Die Öffnung des Auslassventils zum Ende des Ausschiebetaktes führt dazu, dass die Luft durch das geöffnete Auslassventil in das Abgassystem geschoben wird. Im Ansaugtakt wird der Zylinder wieder mit Luft durch das oder die geöffneten Einlassventile (Kurve C) gefüllt. Der Zyklus beginnt erneut.

Wie oben stehend erläutert ist, kommt es durch den Einsatz des zweiten Nockens zur Steuerung des Auslassventils zu einer zweifachen Kompression mit anschließender Dekompression, sodass eine Motorbremsfunktionalität gewährleistet wird.

Wie beim Vergleich der Kurven B und D auffällt, ist der Ventilhub des Auslassventils im Bremsbetrieb (Kurve D) kleiner als im Normalbetrieb (Kurve B). Der Ventilhub ist zudem beim Öffnen des Auslassventils im Verdichtungs- und Expansionstakt zweistufig. Diese Maßnahmen bewirken, dass die Belastung des variablen Ventiltriebs im Bremsbetrieb verringert wird, da durch die Öffnung des Auslassventils gegen den Druck im Zylinder hohe Belastungen an dem Ventiltrieb auftreten können.

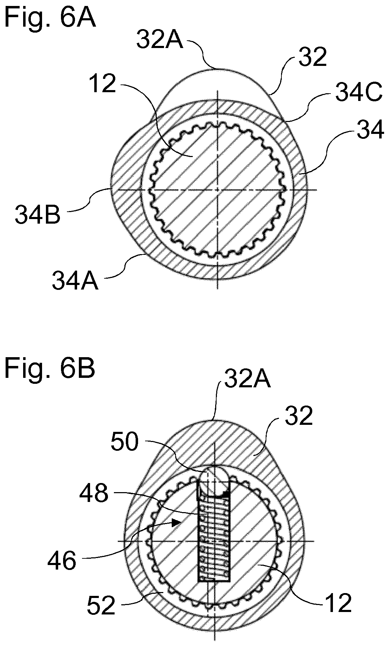

Die Figur 6A zeigt einen Querschnitt durch den zweiten Nocken 34. Die Figur 6B zeigt einen Querschnitt durch den ersten Nocken 32.

Der zweite Nocken 34 ist zur Erzielung der Kurve D aus Figur 5 ausgebildet. Dazu weist der zweite Nocken 34 insbesondere eine erste Erhebung 34A, eine zweite Erhebung 34B und eine dritte Erhebung 34C auf. Die erste, zweite und dritte Erhebung 34A-34C sind in Umfangsrichtung um den zweiten Nocken 34 versetzt angeordnet. Die erste Erhebung 34A führt zu der Öffnung eines Auslassventils am Ende des Verdichtungstaktes. Die zweite Erhebung 34B, die sich ausgehend von der ersten Erhebung 34A erstreckt, führt zu einer erweiterten Öffnung eines Auslassventils während des Expansionstaktes. Die dritte Erhebung 34C führt zu einer Öffnung eines Auslassventils am Ende des Auslasstaktes.

Die erste Erhebung 34A hat die kleinste Höhe der Erhebungen 34A-34C gemessen in einer Radialrichtung der Nockenwelle 12. Die zweite Erhebung 34B hat die größte Höhe der Erhebungen 34A-34C gemessen in einer Radialrichtung der Nockenwelle 12. Die dritte Erhebung 34C ist kleiner als die zweite Erhebung 34B und größer als die erste Erhebung 34A. Unterschiedliche Höhen der Erhebungen 34A-34C führen zu entsprechend unterschiedlichen Ventilhüben (vgl. Figur 5).

Die erste, zweite und dritte Erhebung 34A-34C ist jeweils umfangsversetzt zu einer Erhebung 32A des ersten Nockens 32 angeordnet. Der erste Nocken 32 ist zur Erzielung der Kurve B aus Figur 5 ausgebildet. Die Erhebung 32A des ersten Nockens 32 führt zu einer Öffnung eines Auslassventils während des Ausschiebetaktes. Die Erhebung 32A ist in einer Radialrichtung der Nockenwelle 12 gemessen höher als die Erhebungen 34A-34C. Der Ventilhub durch die Erhebung 32A ist größer als durch die Erhebungen 34A-34C.

Die Figur 6B zeigt zudem die Arretierungsvorrichtung 46 mit dem elastischen Element 48, dem Sperrkörper 50 und der ersten Ausnehmung 52.

Nachfolgend ist unter Bezugnahme auf die Figuren 1, 2, 7 und 8 ein Verfahren zur Hochschaltunterstützung beschrieben, das die zuvor beschriebene Motorbremsfunktionalität nutzt.

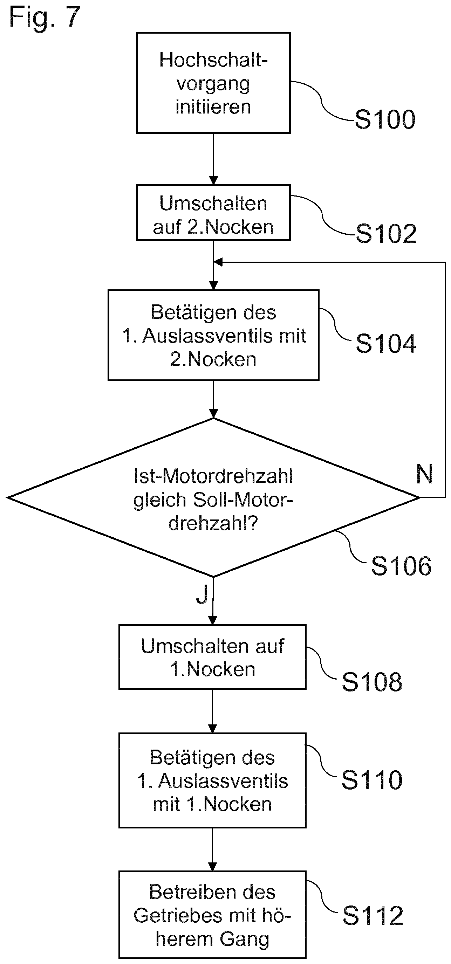

Die Figur 7 zeigt ein beispielhaftes Verfahren zur Hochschaltunterstützung. Das Verfahren beginnt bei Schritt S100 mit dem Initiieren eines Hochschaltvorgangs. Bei Verwendung eines automatischen Getriebes kann beispielsweise auf Grundlage einer Motordrehzahl und/oder einer Drosselklappenstellung bestimmt werden, dass auf einen höheren Gang mit einer höheren Übersetzung zu schalten ist. Das Getriebe kann beispielsweise ein automatisches Doppelkupplungsgetriebe eines Nutzfahrzeugs, zum Beispiel eines Lastkraftwagens oder eines Omnibusses, sein. Die höhere Übersetzung des höheren Gangs führt zu einer verringerten Getriebedrehzahl. Daher muss für das Schalten auf den höheren Gang eine Motordrehzahl verringert werden. Umso schneller die Motordrehzahl verringert werden kann, in desto kürzerer Zeit kann der Schaltvorgang abgeschlossen werden.

Um die Motordrehzahl zu verringern, wird im Schritt S102 von dem ersten Nocken 32 auf den zweiten Nocken 34 durch das Schaltnockensystemen 11 umgeschaltet. Damit wird nachfolgend das erste Auslassventil 20 mit dem zweiten Nocken 34 betätigt (Schritt S104). Die zweifache Dekompression, die durch den zweiten Nocken 34 bewirkt wird, führt zu einer schnellen Verringerung der Motordrehzahl.

Der zweite Nocken 34 wird so lange zum Betätigen des ersten Auslassventils 20 verwendet, bis die Ist-Motordrehzahl gleich einer Soll-Motordrehzahl. Die Soll-Motordrehzahl kann im Wesentlichen einer Getriebedrehzahl mit dem eingelegten höheren Gang entsprechen.

Im Schritt S106 wird geprüft, ob eine vorbestimmte Umschaltbedingung erfüllt ist. Zweckmäßigerweise kann geprüft werden, ob die Ist-Motordrehzahl gleich der Soll-Motordrehzahl ist. Ist die Ist-Motordrehzahl ungleichen der Soll-Motordrehzahl wird das erste Auslassventil 20 weiter mit dem zweiten Nocken 34 betätigt, sodass die Motordrehzahl weiter abgesenkt werden kann. Entspricht die Ist-Motordrehzahl der Soll-Motordrehzahl, so wird im Schritt S108 auf den ersten Nocken 32 umgeschaltet. Folglich wird das erste Auslassventil 20 nachfolgend von dem ersten Nocken 32 betätigt (Schritt S110).

Aufgrund der Drehzahlangleichung zwischen der Motordrehzahl und der Getriebedrehzahl kann das Getriebe nachfolgend mit dem höheren Gang betrieben werden (Schritt S112) und der Hochschaltvorgang kann abgeschlossen werden.

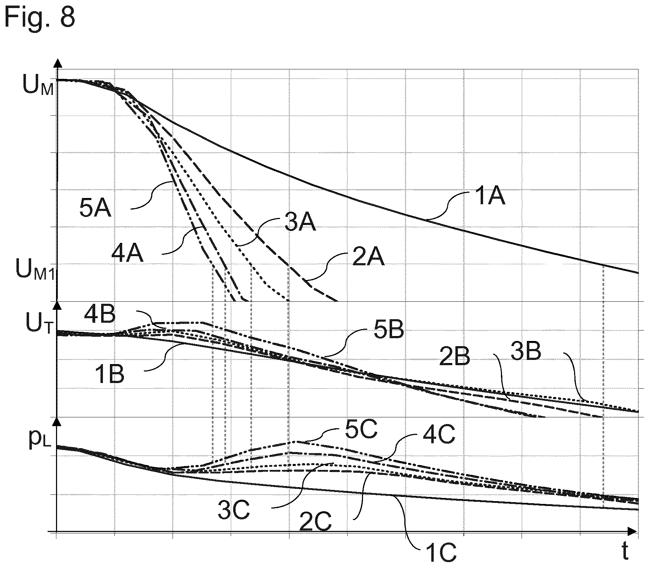

Die Figur 8 zeigt mit dem Verfahren erzielbare Motordrehzahlverläufe, Turboladerdrehzahlverläufe und Ladedruckverläufe.

Im Einzelnen zeigt die Figur 8 fünf verschiedene Motordrehzahlverläufe 1A-5A, fünf verschiedene Turbinendrehzahlverläufe 1B-5B und fünf verschiedene Ladedruckverläufe 1C-5C. Die Turbinendrehzahlverläufe 1B-5B beziehen sich auf die Drehzahl einer Turbine eines Abgasturboladers des Verbrennungsmotors. Die Ladedruckverläufe beziehen sich auf einen durch den Verdichter des Abgasturboladers bereitgestellten Ladedruck.

Die jeweils fünf Kurven für die Motordrehzahl, die Turbinendrehzahl und den Ladedruck beziehen sich unter anderem auf unterschiedlicher Ausführungsformen des hierin offenbarten Verfahrens zur Hochschaltunterstützung. Die gestrichelten Kurven 2A, 2B und 2C beziehen sich auf Verläufe, die erzielbar sind, wenn bei einem Sechszylinder-Verbrennungsmotor zwei Zylinder zur Hochschaltunterstützung verwendet werden. Mit anderen Worten gesagt, werden lediglich zwei der sechs Zylinder während des Hochschaltvorgangs mit dem entsprechenden zweiten Nocken 34 betätigt. D.h., nur zwei der sechs Zylinder werden in einem Motorbremsbetrieb während des Hochschaltvorgangs betrieben. Dementsprechend beziehen sich die gepunkteten Kurven 3A, 3B, 3C, die Strichpunkt-Kurven 4A, 4B, 4C und die Strichdoppelpunkt-Kurven 5A, 5B, 5C auf Ausführungsformen bei denen drei, vier oder alle Zylinder während des Hochschaltvorgangs durch das Schiebenockensystem 11 in einem Motorbremsbetrieb betrieben werden. Zum Vergleich zeigen die durchgezogenen Kurven 1A, 1B, 1C einen Verlauf, bei dem kein Zylinder während des Hochschaltvorgangs in einem Motorbremsbetrieb betrieben wird.

Beim Vergleich der Verläufe 1A-5A ist ersichtlich, dass die Verwendung des Motorbremsbetriebs die Motordrehzahlen deutlich reduzieren kann (Kurve 1A ggü. Kurven 2A-5A). Beispielhaft kann bereits durch Schalten zweier Zylinder in den Motorbremsbetrieb während des Hochschaltens eine Dauer zur Drehzahlabsenkung bis auf rund 1000 U/min bei U_{M1} mehr als halbiert werden. Das Zuschalten weiterer Zylinder in den Motorbremsbetrieb führt jeweils zu einer weiteren Verringerung der Zeitdauer zur Absenkung auf beispielsweise 1000 U/min. Mit jedem weiteren Zylinder im Motorbremsbetrieb wird der Effekt kleiner (Kurve 2A ggü. Kurve 3A ggü. Kurve 4A ggü Kurve 5A).

Dadurch, dass kein Abgasdrosselventil für die Motorbremse beim Hochschalten verwendet wird, kann zudem eine Turboladerdrehzahl und ein Ladedruck des Turboladers während des Hochschaltens positiv beeinflusst werden. Ohne den hierin offenbarten Motorbremsbetrieb sinken eine Turboladerdrehzahl (Kurve 1B) und ein Ladedruck (Kurve 1C) während des Hochschaltens allmählich ab. Der geringe Ladedruck kann als ein Turboloch wahrgenommen werden, nachdem in den höheren Gang geschaltet wurde.

Wird hingegen der beispielsweise durch das Schiebenockensystem 11 ermöglichte Motorbremsbetrieb verwendet, kann die Turboladerdrehzahl und der Ladedruck während des Hochschaltens positiv beeinflusst werden, sodass vorzugsweise kein, zumindest jedoch lediglich ein verkleinertes Turboloch nach dem Einlegen des höheren Gangs wahrnehmbar ist. Dies liegt einerseits daran, dass kein Abgasdrosselventil für den Motorbremsbetrieb verwendet wird, der eine Drehzahl der Turbine des Turboladers beim Drosseln des Abgasmassenstroms ebenfalls verringert. Andererseits liegt es daran, dass der Teil der Zylinder, die während des Hochschaltens im Motorbremsbetrieb betrieben werden, aufgrund der zweifachen Dekompression zweimal verdichtete Luft während eines Arbeitszyklus in den Abgastrakt schieben. Dies ist der Fall zum Ende des Verdichtungstaktes und zum Ende des Ausschiebetaktes, wenn der zweite Nocken 34 das erste Auslassventil 20 öffnet. Die verdichtete Luft kann die Turbine des Turboladers antreiben. Dementsprechend ist der Effekt umso größer, desto mehr Zylinder während des Hochschaltens im Motorbremsbetrieb verwendet werden.

Umso mehr Zylinder in den Motorbremsbetrieb während des Hochschaltens geschaltet werden, desto stärker kann zwischenzeitlich eine Turboladerdrehzahl U_{T} erhöht werden, wie der Vergleich der Verläufe 2B-5B zeigt.

Umso mehr Zylinder in den Motorbremsbetrieb während des Hochschaltens geschaltet werden, desto stärker kann ein Absinken des Ladedrucks p_{L} verhindert werden, der Ladedruck p_{L} gehalten oder sogar erhöht werden, wie der Vergleich der Verläufe 2C-5C zeigt. Zusätzlich kann ein höherer Ladedruck p_{L} in kürzerer Zeit bei einer Schwellwertdrehzahl, z.B. U_{M1}, erreicht werden, wie unter Zuhilfenahme der vertikalen gepunkteten Linien in Figur 8 ersichtlich ist.

Das hierin offenbarte Verfahren zur Hochschaltunterstützung kann auf vielfältige Art und Weise modifiziert und ergänzt werden.

Beispielsweise ist es möglich, eine Betätigung des ersten Auslassventils 20 mit dem zweiten Nocken 34 von verschiedenen Parametern abhängig zu machen. Somit kann einerseits bestimmt werden, ob das erste Auslassventil 20 überhaupt mit dem zweiten Nocken 34 betätigt wird und wenn ja, wie viele Zylinder im Motorbremsbetrieb verwendet werden. Damit kann ein Ausgleich zwischen einem Verschleiß des variablen Ventiltriebs 10 und einem schnellen Hochschaltvorgang gefunden werden. Derartige Parameter können insbesondere eine während des Hochschaltvorgangs erforderliche Drehzahlabsenkung und Drehmomenterhöhung sein. Zusätzlich kommen beispielsweise eine gewünschte Zeitdauer des Hochschaltvorgangs, eine gewünschte Turboladerdrehzahl und/oder ein gewünschter Ladedruck als Parameter in Betracht.

Umso größer die erforderliche Drehzahlabsenkung, umso größer die erforderliche Drehmomenterhöhung, umso kürzer die gewünschte Zeitdauer des Hochschaltvorgangs umso größer die gewünschte Turboladerdrehzahl und umso größer der gewünschte Ladedruck ist, desto mehr Zylinder können in den Motorbremsbetrieb geschaltet. Beispielsweise können entsprechende Schwellwert für bestimmte Betriebsbedingungen des Verbrennungsmotors hinterlegt sein, anhand derer bestimmt wird, ob und wie viele Zylinder im Motorbremsbetrieb während des Hochschaltens betrieben werden. Die Schwellwerte können sich auf erforderliche Drehzahlabsenkungen, erforderliche Drehmomenterhöhungen, gewünschte Hochschaltdauern, gewünschte Turboladerdrehzahlen und/oder gewünschte Ladedrücke beziehen.

Falls beispielsweise nur eine sehr geringe Drehzahlabsenkung erforderlich ist, kann gegebenenfalls auf die Umschaltung in den Motorbremsbetrieb verzichtet werden.

Ist bspw. eine besonders kurze Hochschaltdauer gewünscht, kann bestimmt werden, wie viele Zylinder während des Hochschaltvorgangs in den Motorbremsbetrieb umzuschalten sind, um die gewünschte Hochschaltdauer zu erzielen.

Es ist auch denkbar, dass bei einer Mehrzahl von Schiebenockensystemen 11 eine erste Gruppe von Schiebenockensystemen 11 das entsprechende erste Auslassventil 20 mit dem entsprechenden zweiten Nocken 34 während des Hochschaltvorgangs betätigt. Eine zweite Gruppe von Schiebenockensystemen 11 hingegen betätigt das entsprechende erste Auslassventil 20 mit dem entsprechenden ersten Nocken 32. Eine Zuordnung zu den Gruppen kann rollierend zwischen aufeinanderfolgenden Hochschaltvorgängen oder während eines einzigen Hochschaltvorgangs erfolgen. Damit kann ein Verschleiß unter den Schiebenockensystemen 11 vergleichmäßigt werden.

Das hierin offenbarte Verfahren kann vorzugsweise zum Hochschaltunterstützung bei einem Verbrennungsmotor eines Nutzfahrzeugs und generell bei Großmotoren verwendet werden, da hier eine Zeitdauer zum Hochschalten vergleichsweise lang sein kann.

Wie oben stehend erläutert ist, kann das Verfahren zur Hochschaltunterstützung des Verbrennungsmotors das Schiebenockensystem 11 verwenden. Insbesondere kann die Steuereinheit 27 die Aktoren 24 und 26 entsprechend dem hierin offenbarten Verfahren zur Hochschaltunterstützung des Verbrennungsmotors ansteuern. Allerdings kann das Verfahren auch einen andren variablen Ventiltrieb zum Bereitstellen der Motorbremse verwenden. Es ist auch denkbar, dass ein anderes System zum entsprechenden Betätigen der Auslassventile verwendet wird, bei dem ein erstes Auslassventil des Verbrennungsmotors im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche.

### Bezugszeichenliste

- 10: Variabler Ventiltrieb
- 11: Schiebenockensystem
- 12: Nockenwelle
- 14: Nockenträger
- 16: Erste Übertragungsvorrichtung (erster Schlepphebel)
- 18: Zweite Übertragungsvorrichtung (zweiter Schlepphebel)
- 18A: Kontaktbereich
- 20: Erstes Auslassventil
- 22: Zweites Auslassventil
- 24: Erster Aktor
- 26: Zweiter Aktor
- 27: Steuereinheit
- 28: Erster Anschlag
- 30: Zweiter Anschlag
- 32: Erster Nocken
- 32A: Erhebung
- 34: Zweiter Nocken
- 34A-34C: Erhebungen
- 36: Dritter Nocken
- 38: Erster nockenfreier Abschnitt
- 40: Zweiter nockenfreier Abschnitt
- 42: Erste Eingriffsspur
- 44: Zweite Eingriffsspur
- 46: Arretierungsvorrichtung
- 48: Elastisches Element
- 50: Sperrkörper
- 52: Erste Ausnehmung
- 54: Zweite Ausnehmung

- A: Zylinderdruck
- B: Auslassventilsteuerkurve
- C: Einlassventilsteuerkurve
- D: Auslassventilsteuerkurve
- 1A-5A: Unterschiedliche Motordrehzahlverläufe
- 1B-5B: Unterschiedliche Turbinendrehzahlverläufe
- 1C-5C: Unterschiedliche Ladedruckverläufe

## Patentansprüche

1. Verfahren zur Hochschaltunterstützung bei einem Gangwechsel eines mit einem Verbrennungsmotor verbundenen Getriebes, aufweisend:
Initiieren eines Hochschaltvorgangs;
Verringern einer Motordrehzahl des Verbrennungsmotors durch Schalten in einen Motorbremsbetrieb, wobei:
a) mittels eines variablen Ventiltriebs (10), insbesondere eines Schiebenockensystems (11), des Verbrennungsmotors in den Motorbremsbetrieb geschaltet wird; und
b) in dem Motorbremsbetrieb ein erstes Auslassventil (20) des Verbrennungsmotors im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird;
Geschlossen-Halten eines zweiten Auslassventils (22) des Verbrennungsmotors während des Hochschaltvorgangs, wobei das zweite Auslassventil (22) demselben Zylinder des Verbrennungsmotors zugeordnet ist wie das erste Auslassventil (20).

2. Verfahren nach Anspruch 1, ferner aufweisend:
Halten und/oder Erhöhen eines Ladedrucks und/oder einer Turboladerdrehzahl eines Turboladers des Verbrennungsmotors durch Ausschieben der verdichteten Luft zu einer Abgasturbine des Turboladers im Verdichtungstakt und/oder im Ausschubtakt durch Öffnen des ersten Auslassventils (20) vor Erreichen des oberen Totpunkts der Kolbenbewegung.

3. Verfahren nach einem der vorherigen Ansprüche, ferner aufweisend:
Erfassen einer erforderlichen Drehzahlabsenkung für den Hochschaltvorgang, einer erforderlichen Drehmomenterhöhung für den Hochschaltvorgang, einer gewünschten Dauer des Hochschaltvorgangs, einer gewünschten Turboladerdrehzahl insbesondere am Ende des Hochschaltvorgangs und/oder einem gewünschten Ladedruck insbesondere am Ende des Hochschaltvorgangs, und
wobei der Schritt des Verringerns der Motordrehzahl des Verbrennungsmotors durch Schalten in den Motorbremsbetrieb in Abhängigkeit von der erforderlichen Drehzahlabsenkung, der erforderlichen Drehmomenterhöhung, der gewünschten Dauer des Hochschaltvorgangs, der gewünschten Turboladerdrehzahl und/oder des gewünschten Ladedrucks durchgeführt wird.

4. Verfahren nach einem der vorherigen Ansprüche, wobei:
eine erste Gruppe von Zylindern während des Hochschaltvorgangs in den Motorbremsbetrieb geschaltet wird; und
eine zweite Gruppe von Zylindern des Verbrennungsmotors während des Hochschaltvorgangs im Normalbetrieb weiterbetrieben wird.

5. Verfahren nach Anspruch 4, wobei eine Anzahl von Zylindern in der ersten Gruppe und/oder der zweiten Gruppe in Abhängigkeit von der erforderlichen Drehzahlabsenkung, der erforderlichen Drehmomenterhöhung, der gewünschten Dauer des Hochschaltvorgangs, der gewünschten Turboladerdrehzahl und/oder dem gewünschten Ladedruck bestimmt wird.

6. Verfahren nach Anspruch 4 oder Anspruch 5, wobei eine Zuordnung zur ersten Gruppe und/oder zur zweiten Gruppe rollierend, insbesondere rollierend zwischen aufeinanderfolgenden Hochschaltvorgängen, erfolgt.

7. Verfahren nach einem der vorherigen Ansprüche, wobei das erste Auslassventil (20) im Motorbremsbetrieb zwischen 100° KW und 60° KW vor dem Erreichen des oberen Totpunkts öffnet, nach dem Öffnen im Ausschubtakt im Bereich zwischen dem oberen Totpunkt und 30° KW nach dem oberen Totpunkt schließt, und/oder nach dem Öffnen im Verdichtungstakt im Bereich zwischen dem unteren Totpunkt und 30° KW nach dem unteren Totpunkt schließt.

8. Verfahren nach einem der vorherigen Ansprüche, wobei das Geschlossen-Halten des zweiten Auslassventils (22) eine Umschaltung auf einen nockenfreien Abschnitt (38) des Schiebennockensystems (11) aufweist.

9. Verfahren nach einem der vorherigen Ansprüche, wobei das Schiebenockensystem (11) einen ersten Nocken (32) für einen Normalbetrieb des Verbrennungsmotors und einen zweiten Nocken (34) für den Motorbremsbetrieb des Verbrennungsmotors aufweist, wobei das Schiebenockensystem (11) wahlweise den ersten Nocken (32) und das erste Auslassventil (20) in Wirkverbindung setzt oder den zweiten Nocken (34) und das erste Auslassventil (20) in Wirkverbindung setzt.

10. Verfahren nach Anspruch 9, wobei das Schalten in den Motorbremsbetrieb aufweist:
Umschalten von dem ersten Nocken (32) auf den zweiten Nocken (34) durch das Schiebenockensystem (11); und
Betätigen des ersten Auslassventils (20) mittels des zweiten Nockens (34), der das erste Auslassventil (20) im Verdichtungstakt und/oder im Ausschubtakt zunächst geschlossen hält und vor Erreichen des oberen Totpunkts der Kolbenbewegung öffnet.

11. Verfahren nach Anspruch 9 oder Anspruch 10, ferner aufweisend:
Umschalten von dem zweiten Nocken (34) auf den ersten Nocken (32) durch das Schiebenockensystem (11), wenn die Motordrehzahl auf eine gewünschte Drehzahl, insbesondere eine Getriebedrehzahl des Getriebes, verringert wurde.

12. Verfahren nach einem der vorherigen Ansprüche, wobei:
der Hochschaltvorgang automatisch in Anhängigkeit von einer Motordrehzahl und/oder einer Drosselklappenstellung initiiert wird; und/oder
im Getriebe während des Hochschaltvorgangs von einem Getriebegang zu einem anderen Getriebegang mit höherer Übersetzung geschaltet wird.

13. Variabler Ventiltrieb (10) für einen Verbrennungsmotor eines Kraftfahrzeugs, insbesondere Nutzfahrzeugs, aufweisend:
ein erstes Auslassventil (20);
eine Nockenwelle (12);
ein Schiebenockensystem (11) mit einem Nockenträger (14), der auf der Nockenwelle (12) drehfest und axial verschiebbar angeordnet ist und einen ersten Nocken (32) und einen zweiten Nocken (34) aufweist, wobei der erste Nocken (32) und der zweite Nocken (34) in einer Längsrichtung der Nockenwelle (12) versetzt angeordnet sind; und
eine Steuereinheit (27), die dazu ausgebildet ist, das Verfahren nach einem der vorherigen Ansprüche durchzuführen.

14. Kraftfahrzeug, insbesondere Nutzfahrzeug, mit einem variablen Ventiltrieb (10) nach Anspruch 13.

## Claims

1. Method for assisted upshifting during a gear change of a transmission connected to a combustion engine, comprising:
initiation of an upshifting process; and
reduction of an engine speed of the combustion engine by switching to an engine-braking mode, wherein:
a) a variable valve gear (10), in particular a trip cam system (11), of the combustion engine serves for switching to the engine-braking mode; and
b) in the engine-braking mode a first exhaust valve (20) of the combustion engine is at first kept closed during the compression stroke and/or during the exhaust stroke for the compression of air and is opened, for decompression of the compressed air, before a top dead centre of a piston movement is reached;
keeping a second exhaust valve (22) of the combustion engine closed during the upshifting process, wherein the second exhaust valve (22) is assigned to the same cylinder of the combustion engine as the first exhaust valve (20).

2. Method according to Claim 1, further comprising:
maintenance and/or increasing of a boost pressure and/or a turbocharger speed of a turbocharger of the combustion engine by expelling the compressed air to an exhaust-gas turbine of the turbocharger during the compression stroke and/or during the exhaust stroke through opening of the first exhaust valve (20) before the top dead centre of the piston movement is reached.

3. Method according to one of the preceding claims, further comprising:
sensing of a required speed reduction for the upshifting process, a required torque increase for the upshifting process, a desired duration of the upshifting process, a desired turbocharger speed, particularly at the end of the upshifting process, and/or a desired boost pressure, particularly at the end of the upshifting process, and
wherein the step of reducing the engine speed of the combustion engine by switching to the engine-braking mode is performed as a function of the required speed reduction, the required torque increase, the desired duration of the upshifting process, the desired turbocharger speed and/or the desired boost pressure.

4. Method according to one of the preceding claims, wherein:
a first group of cylinders is switched to the engine-braking mode during the upshifting process; and
a second group of cylinders of the combustion engine continues to be operated in the normal operating mode during the upshifting process.

5. Method according to Claim 4, wherein a number of cylinders in the first group and/or the second group is determined as a function of the required speed reduction, the required torque increase, the desired duration of the upshifting process, the desired turbocharger speed and/or the desired boost pressure.

6. Method according to Claim 4 or Claim 5, wherein an assignment to the first group and/or to the second group is made on a rolling basis, in particular between successive upshifting processes.

7. Method according to one of the preceding claims, wherein in the engine-braking mode the first exhaust valve (20) opens at between 100° CA and 60° CA before the top dead centre is reached, and after opening during the exhaust stroke closes in the range between the top dead centre and 30° CA after the top dead centre, and/or after opening during the compression stroke closes in the range between the bottom dead centre and 30° CA after the bottom dead centre.

8. Method according to one of the preceding claims, wherein the keeping of the second exhaust valve (22) closed comprises a switch to a cam-free portion (38) of the trip cam system (11).

9. Method according to one of the preceding claims, wherein the trip cam system (11) comprises a first cam (32) for a normal operating mode of the combustion engine and a second cam (34) for the engine-braking mode of the combustion engine, wherein the trip cam system (11) places either the first cam (32) and the first exhaust valve (20) in operative connection, or the second cam (34) and the first exhaust valve (20) in operative connection.

10. Method according to Claim 9, wherein the switching to the engine-braking mode comprises:
switching over from the first cam (32) to the second cam (34) by the trip cam system (11); and
actuation of the first exhaust valve (20) by means of the second cam (34), which at first keeps the first exhaust valve (20) closed during the compression stroke and/or during the exhaust stroke and opens it before the top dead centre of the piston movement is reached.

11. Method according to Claim 9 or Claim 10, further comprising:
switching over from the second cam (34) to the first cam (32) by the trip cam system (11) when the engine speed has been reduced to a desired speed, in particular a transmission speed of the transmission.

12. Method according to one of the preceding claims, wherein:
the upshifting process is initiated automatically as a function of an engine speed and/or a throttle valve position; and/or
the transmission is shifted from one gear to another gear with a higher transmission ratio during the upshifting process.

13. Variable valve gear (10) for a combustion engine of a motor vehicle, in particular a commercial vehicle, comprising:
a first exhaust valve (20);
a camshaft (12);
a trip cam system (11) having a cam carrier (14), which is arranged so that it is rotationally fixed and axially displaceable on the camshaft (12) and comprises a first cam (32) and a second cam (34), wherein the first cam (32) and the second cam (34) are arranged offset in a longitudinal direction of the camshaft (12); and
a control unit (27), which is designed to perform the method according to one of the preceding claims.

14. Motor vehicle, in particular a commercial vehicle, having a variable valve gear (10) according to Claim 13.

## Revendications

1. Procédé d'aide à la montée en vitesse dans le cas d'un changement de vitesses d'une boîte de vitesses connectée à un moteur à combustion interne, présentant :
l'amorçage d'une opération de montée en vitesse ;
la réduction d'une vitesse de rotation du moteur à combustion interne par commutation à un mode de frein moteur, où :
a) une commande de soupapes variable (10), en particulier un système de cames coulissantes (11), du moteur à combustion interne, permet de commuter au mode de frein moteur ; et
b) une première soupape d'échappement (20) du moteur à combustion interne dans le mode de frein moteur est d'abord maintenue fermée pendant un temps de compression et/ou pendant un temps d'expulsion pour la compression de l'air et avant d'atteindre un point mort haut d'un mouvement du piston, est ouverte pour décomprimer l'air comprimé ;
le maintien fermé d'une deuxième soupape d'échappement (22) du moteur à combustion interne pendant l'opération de montée en vitesse, la deuxième soupape d'échappement (22) étant associée au même cylindre du moteur à combustion interne que la première soupape d'échappement (20).

2. Procédé selon la revendication 1, présentant en outre :
le maintien et/ou l'augmentation d'une pression de charge et/ou d'une vitesse de rotation de turbocompresseur d'un turbocompresseur du moteur à combustion interne par expulsion de l'air comprimé vers une turbine à gaz d'échappement du turbocompresseur pendant le temps de compression et/ou pendant le temps d'expulsion par l'ouverture de la première soupape d'échappement (20) avant d'atteindre le point mort haut du mouvement du piston.

3. Procédé selon l'une quelconque des revendications précédentes, présentant en outre :
la détection d'une réduction de vitesse de rotation nécessaire pour l'opération de montée en vitesse, d'une augmentation de couple nécessaire pour l'opération de montée en vitesse, d'une durée souhaitée de l'opération de montée en vitesse,
d'une vitesse de rotation souhaitée du turbocompresseur en particulier à la fin de l'opération de montée en vitesse et/ou d'une pression de charge souhaitée, en particulier à la fin de l'opération de montée en vitesse, et
l'étape de réduction de la vitesse de rotation du moteur à combustion interne par commutation au mode de frein moteur étant effectuée en fonction de la réduction de vitesse de rotation nécessaire, de l'augmentation de couple nécessaire, de la durée souhaitée de l'opération de montée en vitesse, de la vitesse de rotation souhaitée du turbocompresseur et/ou de la pression de charge souhaitée.

4. Procédé selon l'une quelconque des revendications précédentes, dans lequel :
un premier groupe de cylindres est commuté au mode de frein moteur pendant l'opération de montée en vitesse ; et
un deuxième groupe de cylindres du moteur à combustion interne continue de fonctionner en mode normal pendant l'opération de montée en vitesse.

5. Procédé selon la revendication 4, dans lequel un nombre de cylindres dans le premier groupe et/ou dans le deuxième groupe est déterminé en fonction de la réduction de vitesse de rotation nécessaire, de l'augmentation de couple nécessaire, de la durée souhaitée de l'opération de montée en vitesse, de la vitesse de rotation souhaitée du turbocompresseur et/ou de la pression de charge souhaitée.

6. Procédé selon la revendication 4 ou la revendication 5, dans lequel une affectation au premier groupe et/ou au deuxième groupe s'effectue de manière roulante, en particulier de manière roulante entre des opérations de montée en vitesse successives.

7. Procédé selon l'une quelconque des revendications précédentes, dans lequel la première soupape d'échappement (20) en mode de frein moteur s'ouvre entre 100° d'angle de vilebrequin et 60° d'angle de vilebrequin avant d'atteindre le point mort haut, se ferme après l'ouverture pendant le temps d'expulsion dans une plage entre le point mort haut et 30° d'angle de vilebrequin après le point mort haut, et/ou se ferme après l'ouverture pendant le temps de compression dans la plage entre le point mort bas et 30° d'angle de vilebrequin après le point mort bas.

8. Procédé selon l'une quelconque des revendications précédentes, dans lequel le maintien fermé de la deuxième soupape d'échappement (22) présente une commutation à une portion sans came (38) du système de cames coulissantes (11).

9. Procédé selon l'une quelconque des revendications précédentes, dans lequel le système de cames coulissantes (11) présente une première came (32) pour un fonctionnement normal du moteur à combustion interne et une deuxième came (34) pour le mode de frein moteur du moteur à combustion interne, le système de cames coulissantes (11) mettant en liaison fonctionnelle de manière sélective la première came (32) et la première soupape d'échappement (20) ou mettant en liaison fonctionnelle la deuxième came (34) et la première soupape d'échappement (20).

10. Procédé selon la revendication 9, dans lequel la commutation aux modes de frein moteur présente :
la commutation de la première came (32) à la deuxième came (34) par le système de cames coulissantes (11) ; et
l'actionnement de la première soupape d'échappement (20) au moyen de la deuxième came (34), qui maintient d'abord fermée la première soupape d'échappement (20) pendant le temps de compression et/ou pendant le temps d'expulsion et qui l'ouvre avant d'atteindre le point mort haut du mouvement du piston.

11. Procédé selon la revendication 9 ou la revendication 10, présentant en outre :
la commutation de la deuxième came (34) à la première came (32) par le système de cames coulissantes (11) quand la vitesse de rotation du moteur a été réduite à une vitesse de rotation souhaitée, en particulier à une vitesse de rotation de boîte de vitesses de la boîte de vitesses.

12. Procédé selon l'une quelconque des revendications précédentes, dans lequel :
l'opération de montée en vitesse est amorcée automatiquement en fonction d'une vitesse de rotation du moteur et/ou d'une position de papillon d'étranglement ; et/ou
une commutation d'une vitesse de la boîte de vitesses à une autre vitesse de la boîte de vitesses à un rapport supérieur est effectuée dans la boîte de vitesses pendant l'opération de montée en vitesse.

13. Commande de soupapes variable (10) pour un moteur à combustion interne d'un véhicule automobile, en particulier d'un véhicule utilitaire, présentant :
une première soupape d'échappement (20) ;
un arbre à cames (12) ;
un système de cames coulissantes (11) avec un support de cames (14) qui est disposé de manière solidaire en rotation et déplaçable axialement sur l'arbre à cames (12) et présente une première came (32) et une deuxième came (34), la première came (32) et la deuxième came (34) étant disposées de manière décalée dans une direction longitudinale de l'arbre à cames (12) ; et
une unité de commande (27) qui est réalisée pour mettre en œuvre le procédé selon l'une quelconque des revendications précédentes.

14. Véhicule automobile, en particulier véhicule utilitaire comprenant une commande de soupapes variable (10) selon la revendication 13.
